# EUROPEAN PATENT APPLICATION

(11) **EP 1 610 500 A1**
(43) Date of publication of application: **28.12.2005**
(21) Application number: 04291588.4
(22) Date of filing: 24.06.2004
(51) Int. Cl.: H04L 12/42, H04L 12/56, G06F 15/173

(54) **On chip packet-switched communication system**

(71) Applicant: STMicroelectronics S.A., 92120 Montrouge (FR)
(72) Inventor: Coppola, Marcello, 38430 Moirand (FR); Locatelli, Riccardo, 38000 Grenoble (FR); Maruccia, Giuseppe, 38000 Grenoble (FR); Pieralisi, Lorenzo, 38180 Seyssins (FR)
(74) Representative: Zapalowicz, Francis

(57) **Abstract**

The system for routing data packets (P) between elements (E₀,E₁,...,E_{N-1}), comprises N network interfaces (NI₀,NI₁,...,NI_{N-1}) respectively adapted to be connected to the N elements (E₀,E₁,...,E_{N-1}), N being an even integer, and an on chip packet-switched communication network arranged in a unique ring structure (RG) including :
- N routers (r₀,r₁,...,r_{N-1}) respectively connected to the N interfaces (NI₀,NI₁,...,NI_{N-1}) ;
- N couples of opposite unidirectional ring links (rlᵢⱼ,rlⱼᵢ), each ring link carrying two virtual channels, and one couple of ring links coupling two adjacent routers on the ring (RG) ;
- N/2 couples of opposite unidirectional crossing links (clᵢⱼ,clⱼᵢ), one couple of crossing links coupling two diametrically opposite routers of said ring (RG).

The system further comprises processing means, distributed within the routers (r₀,r₁,...,r_{N-1}) and the network interfaces (NI₀,NI₁,...,NI_{N-1}), adapted upon the presence of a data packet (P) to be transmitted from one source element (E_{source}) to a destination element (E_{destinalion}) to determine the direction characteristics of the path of said data packet (P) on the ring (RG) and if necessary to determine at each router belonging to said path which virtual channel is to be used, so as to avoid deadlocks in the transmission.

## Description

The invention relates in general to on chip communication networks, and more particularly to packet switched networks.

There are two fundamental approaches towards building a network core: circuit switching and packet switching.

In circuit-switched networks, the resources needed along a path (buffers, links) to provide for communication between the end systems are reserved for the duration of the communication session.

The document EP 1 257 100 discloses a circuit switched network, partly scalable, with a number of nodes being a multiple of eight. More precisely, eight nodes form a ring. And it is necessary to connect several different rings with each other when more than eight nodes, still multiple of eight, must be used

In packet-switched networks, these resources are not reserved. Packets use the resources on demand, and as a consequence, may have not to wait for access to a communication link.

However, in conventional packet-switched networks, problems exist, like a lack of scalability, and deadlock.

A deadlock is a situation wherein a group of data packets are unable to make progress because they are waiting on one another. In other words, a data packet is unable to make progress because other data packets block resources which are necessary for the data packet to progress towards its destination.

Solutions exist, including generally a purge of resources, which however causes loss of data.

Moreover, the current shared-bus systems show their limitation in terms of performance, scalability, power consumption and reliability.

The invention proposes a novel on-chip communication architecture based on micro-networks implementing a flexible packet-switched communication, which is deadlock free.

Another aim of the invention is to propose a scalable packet switched system, having a low cost, even if the number of nodes is great, for example greater than eight.

Thus, the invention proposes a system for routing data packets between elements, comprising N network interfaces respectively adapted to be connected to N elements, N being an even integer, and an on chip packet-switched communication network arranged in a unique ring structure including :
- N routers respectively connected to the N interfaces ;
- N couples of opposite unidirectional ring links, each ring link carrying two virtual channels, and one couple of ring links coupling two adjacent routers on the ring ; and
- N/2 couples of opposite unidirectional crossing links, one couple of crossing links coupling two diametrically opposite routers of said ring ;
the system further comprising processing means, distributed within the routers and the network interfaces, adapted upon the presence of a data packet to be transmitted from one source element to a destination element to determine the direction characteristics of the path of said data packet on the ring and if necessary to determine at each router belonging to said path which virtual channel is to be used, so as to avoid deadlocks in the transmission.

So, the invention combines a unique ring whatever the value of N, two virtual channels per each ring link, and an appropriate determination of the path within the ring structure using eventually the virtual channels.

Of course the "ring" according to the invention is not necessary circular and can have, once implemented on the chip, any geometrical form.

According to a preferred embodiment of the invention, which permits easily to avoid any deadlock, the processing means are adapted to define said path for the transmitted data packet, such that said path includes at least one transition on the ring between two adjacent routers, or a crossing transition between two diametrically opposite routers eventually followed by a circular path on the ring having at least one transition. The direction of a circular path is identical for all the transitions of said circular path.

According to the invention, a "circular path" is a path on the ring, whatever the geometrical form of the ring.

Further, the choice between the two virtual channels, if necessary, is for example, a function of the index of the router on the ring.

According to a preferred embodiment, the processing means are adapted to define said path for the transmitted data packet, such that said path comprises at the most d transitions between routers, d being equal to ceil(N/4).

According to an embodiment, a data packet comprises a header comprising a first field defining the presence of a crossing transition and/or the direction of a circular path on said ring, and a second field defining the destination router. The distributed processing means comprise local preprocessing means in the network interfaces. The local preprocessing means of the network interface connected to the source element is adapted for determining the content of said first field and said second field. The processing means also comprise local routing means within the routers for routing such data packets in accordance with the content of the first and second fields.

In a preferred embodiment, the successive routers are indexed with consecutive indexes, and the local preprocessing means of the source network interface comprise :
- calculating means for calculating a value r equal to the difference modulo N between the index of the destination router and the index of the source router ; and
- determining means for determining the content of said first field from the value of r.

Advantageously, said indexes being increased in the right or clockwise direction, the determining means are adapted to provide the content of said first field with :
- a first value representative of the right or clockwise direction on the ring if said value r belongs to the set {1,2,...,d} ;
- a second value representative of the left or anticlockwise direction on the ring if said value r belongs to the set {N-d,N-d+1,...,N-1} ;
- a third value representative of the crossing ring direction if said value r is equal to N/2 ;
- a fourth value representative of the crossing ring direction followed by the left or anticlockwise direction on the ring if said value r belongs to the set {d+1,d+2...,N/2-1} ; or
- a fifth value representative of the crossing ring direction followed by the right or clockwise direction on the ring otherwise, i.e. if said value r belongs to the set {N/2+1,N/2+2,...,N-d-1}.

Furthermore, each routing means are adapted for :
- routing the data packet to its coupled network interface if the index of the corresponding router is equal to the content of the second field of the header of said data packet ; and otherwise
- routing the data packet according to the content of the first field of the header of said data packet, on a first virtual channel if said index is greater than the content of the second field of the header of the data packet and on a second virtual channel otherwise.

Each router comprises at least two queues connected to an unidirectional ring link connected to said router, each virtual channel being defined by at least one queue and the corresponding unidirectional ring link.

Advantageously, indexes being binary encoded, routing means are adapted to process indexes only with the last ceil(log₂(d)) bits of the indexes.

Indeed, minimizing the size of these data optimises the use of the bandwidth of the network, and the processing time.

Other advantages and features of the invention will appear on examining the detailed description of embodiments, these being in no way limiting, and of the appended drawings in which :
- figure 1 illustrates a system according to an aspect of the invention ;
- figure 2 illustrates some routers with virtual channels of a system according to an aspect of the invention ;
- figure 3a illustrates a network interface according to a system according to an aspect of the invention ;
- figure 3b represents a data packet according to the invention ;
- figure 4 illustrates a first path of a packet according to an aspect of the invention ;
- figure 5 illustrates a second path of a packet according to an aspect of the invention ;
- figure 6 illustrates a third path of a packet according to an aspect of the invention ;
- figure 7 illustrates a fourth path of a packet according to an aspect of the invention ; and
- figure 8 illustrates a fifth path of a packet according to an aspect of the invention.

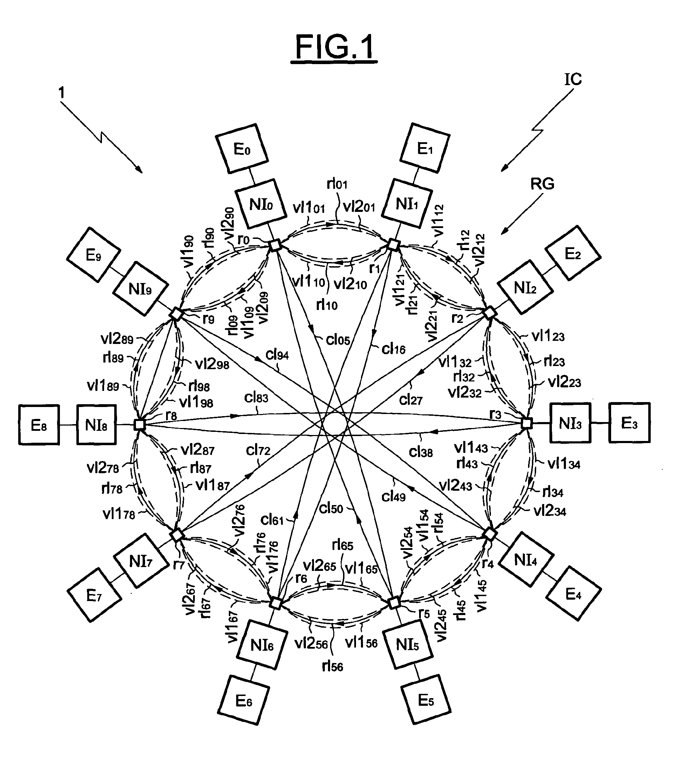

We refer now to figure 1 which illustrates a system 1 according to an aspect of the invention, which is incorporated on a chip IC. This system comprises here N=10 routers r₀,r₁,...,r_{N-1} indexed from 0 to N-1=9 in the clockwise or right direction. Each of these routers r₀,r₁,...,r_{N-1} is connected to a respective network interface NI₀,NI₁,...,NI_{N-1}. Each of these network interface NI₀,NI₁,...,NI_{N-1} is connected to a corresponding element E₀,E₁,...,E_{N-1}.

Elements E₀,E₁,...,E_{N-1} can be for example a processor, a memory, an input, an output, a sub-system bus, or any other element.

The routers r₀,r₁,...,r_{N-1} form a unique ring RG. Two adjacent routers rᵢ,rⱼ of the ring RG are linked with a couple of opposite unidirectional ring links rlᵢⱼ (from rᵢ to rⱼ), rlⱼᵢ (from rⱼ to rᵢ). Each ring link rlₖ₁ carries two virtual channels vl1ₖ₁,vl2ₖ₁.

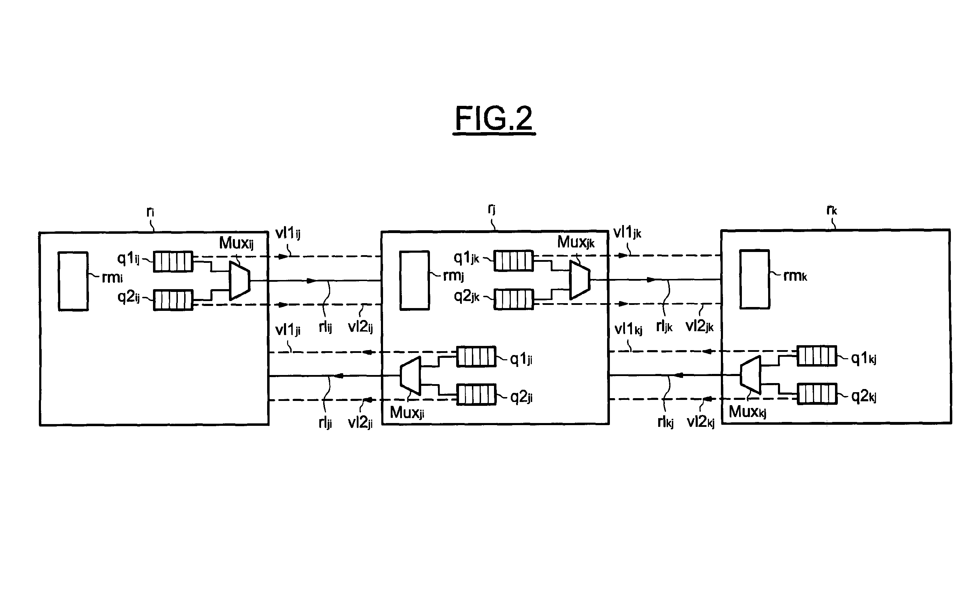

More precisely, the figure 2 represents three adjacent routers rᵢ,rⱼ,rₖ of the ring RG. Each router r₁ of the system comprise routing means rm₁.

Each router further comprises at least two queues q1ᵢⱼ,q2ᵢⱼ and a multiplexer Muxᵢⱼ connected to the unidirectional ring link, for transmitting a data packet from a router rᵢ to a router rⱼ. The multiplexer Muxᵢⱼ is controlled by the routing means rmᵢ. Each of the at least two queues q1ᵢⱼ,q2ᵢⱼ permits to define, associated with the unidirectional ring link, a virtual channel. Each virtual channel has accordingly at least one queue. So each unidirectional ring link rlᵢⱼ have two virtual channels vl1ᵢⱼ,vl2ᵢⱼ.

Turning now again to figure 1, two routers rᵢ,rⱼ, diametrically opposite ((j-i) mod N = N/2) on the ring RG, are linked with a couple of opposite unidirectional crossing links clᵢⱼ (from rᵢ to rⱼ) ,clⱼᵢ (from rⱼ to rᵢ).

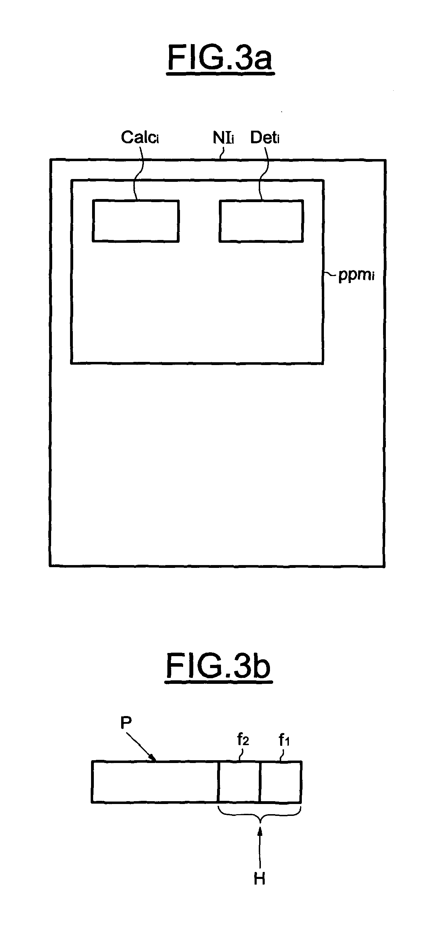

On the figure 3a, a network interface NIᵢ is more detailed. The system comprises processing means, which are distributed within the routers r₀,r₁,...,r_{N-1}, and the network interfaces NI₀,NI₁,...,NI_{N-1} . More precisely the processing means comprise N identical local preprocessing means ppm₀,ppm₁,...,ppm_{N_1}, located within the N network interfaces NI₀,NI₁,...,NI_{N-1}, and N identical routing means rm₀,rm₁,...,rm_{N-1}, located within the N routers r₀,r₁,...,r_{N-1}. The processing means are adapted to determine the path of a data packet P from a source element E_{source} to a destination element E_{destination} of the system.

The path comprises at the most d transitions between routers, d being equal to ceil(N/4). The ceil function of a variable x, when y-1 < x ≤ y, is equal to y, with x a real number and y an integer number.

As illustrated on figure 3b, a data packet P comprises a header H having a first field f₁ and a second field f₂.

The network interface NIᵢ of a source element E_{source} comprises preprocessing means ppm_{source} which are capable, for a data packet P to be transmitted, of determining the content of two fields f₁,f₂ of the header H of the data packet P. The first field f₁ defines the presence of a crossing transition and/or the direction of a circular path on said ring RG. Once on the ring, the data packet keeps the same sense clockwise or anticlockwise. The second field f₂ contains the index of the destination router r_{destination} corresponding to the destination network interface NI_{destination} and the destination element E_{destination}, with its index.

Preprocessing means ppm₀,ppm₁,...,ppm_{N-1}, use a specific process to determine the content of the two fields f₁,f₂ of the header H of a data packet P to be transmitted from a source network interface NI_{source} to a destination network interface NI_{destination} .
Each preprocessing means ppmᵢ comprise calculating means Calcᵢ which calculate a value r equal to the difference between the index of the destination router and the index of the source router modulo N : r = (destination - source) modulo N.
Furthermore, each preprocessing means ppmᵢ comprise determining means Detᵢ for determining the content of said first field f₁ from the value of r. More precisely :
If r belongs to the set {1,2,...,d}, a first value R representative of the right or clockwise direction on the ring RG is set to the first field f₁.
If r belongs to the set {N-d,N-d+1,...,N-1}, a second value L representative of the left or anticlockwise direction on the ring RG is set to the first field f₁.
If r is equal to N/2, a third value A representative of the crossing ring direction RG is set to the first field f₁.
If r belongs to the set {d+1,d+2...,N/2-1}, a fourth value (AL) representative of the crossing ring direction followed by the left or anticlockwise direction on the ring RG is set to the first field f₁.

At last, a fifth value AR representative of the crossing ring direction followed by the right or clockwise direction on the ring is otherwise set to the first field f₁, i.e. if r belongs to the set {N/2+1,N/2+2,...,N-d-1}.

In the present example, the direction (R,L) corresponds to the increasing indexation direction of the routers r₀,r₁,...,r_{N-1}, and so if the indexation direction is opposite, the content of the field f₁, has the opposite value.

There are five possible values for the content of the first field f₁. Theoretically three bits are necessary, but in fact, it is advantageously possible to encode the first field f₁ on 2 bits, because the case of the third value A can be joined either with the case of the fourth value AL, or with the case of the fifth value AR. As a matter of fact, in case A, after the crossing transition, the data packet P will directly send to the corresponding network interface.

An example of an algorithm illustrating this method, wherein the case A (only a crossing transition) is joined with the case AL (a crossing transition followed by at least one transition in the left or anticlockwise direction on the ring RG) is shown therebelow :

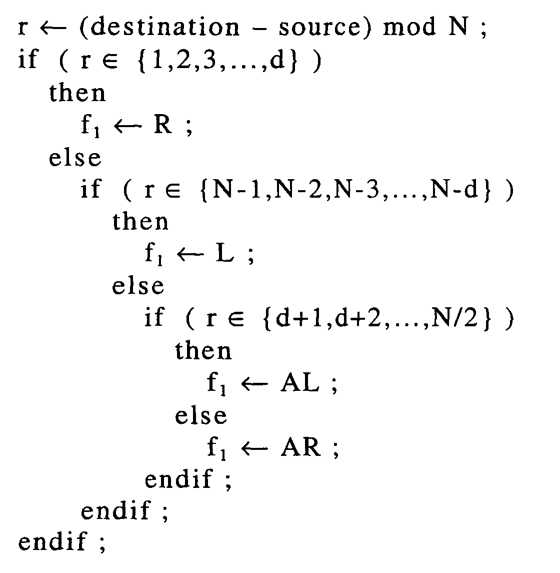

Each routing means rmᵢ is capable of routing the data packet to its coupled network interface if the index i of the corresponding router is equal to the content (destination) of the second field f₂ of the header H of said data packet P. Otherwise, if its index i is greater than the content (destination) of the second field f₂ of the header H of the data packet p, the routing means rmᵢ route the data packet P on the first virtual channel, and if destination is greater than its index i the routing means rmᵢ route the data packet P on the second virtual channel.

In fact the choice of a virtual channel corresponds to the choice of the corresponding queue for temporary storing the data packet P before its transmission on the ring link.

An example of an algorithm implemented in the routing means and illustrating this method is :

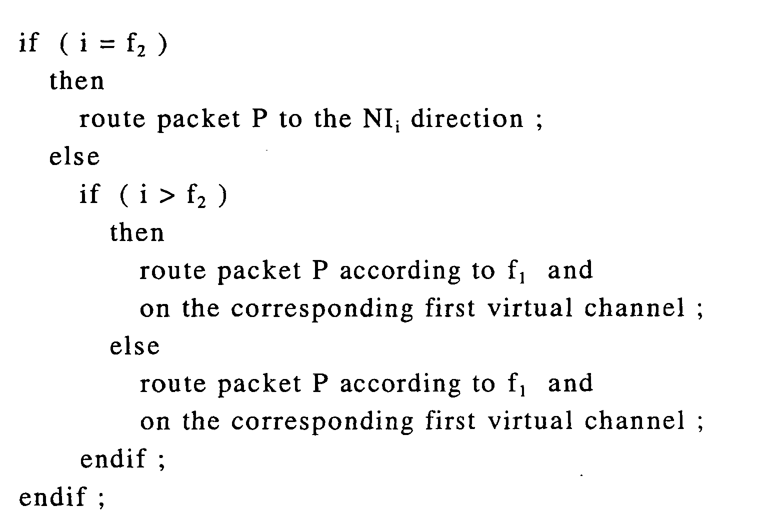

The preprocessing means and the routing means can be implemented by software within microcontrollers, or can be realized by logic circuits by using for example logic synthesis tools from the algorithm above described converted in a specific language, like VHDL.

Furthermore, all indexes used in this invention are binary encoded with bits. However the routing means need to use, because there is at the most d transitions in a path, only the last ceil(log₂(d)) bits

This topology of the network associated to the method for routing data packets permits to avoid deadlock problems. Indeed, the resource dependency graph, here the virtual channel dependency graph has no cycle, so the corresponding network is deadlock free. The generic scalable network proposed in this invention has a channel dependency graph cycle free, in particular because of the use of two virtual channels per unidirectional ring link and because of the fact that a crossing transition is always performed before eventual transitions on a circular path.

Five cases of a data packet transmission according to the invention will be now illustrated.

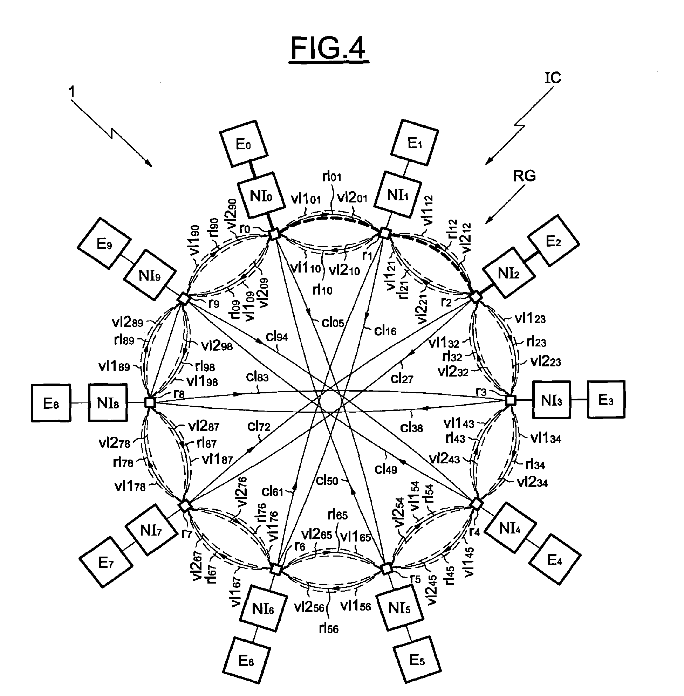

On the figure 4, the path of a data packet P from the source element E₀ to the destination element E₂ is highlighted. The preprocessing means ppm₀ of the network interface NI₀ set the value R in the first field f₁ of the header H of the data packet P. Then the routing means rm₀ of the router r₀ send the data packet P on the ring RG, in the right or clockwise direction R, on the second virtual channel vl2₀₁. So the router r₁, receives the data packet P. The routing means rm₁ of the router r_{1,} send the data packet P on the ring RG, in the right direction R, on the second virtual channel vl2₁₂. When the data packet P is received by the routing means rm₂ of the router r₂, this data packet P is transmitted to the network interface NI₂, to the destination element E₂.

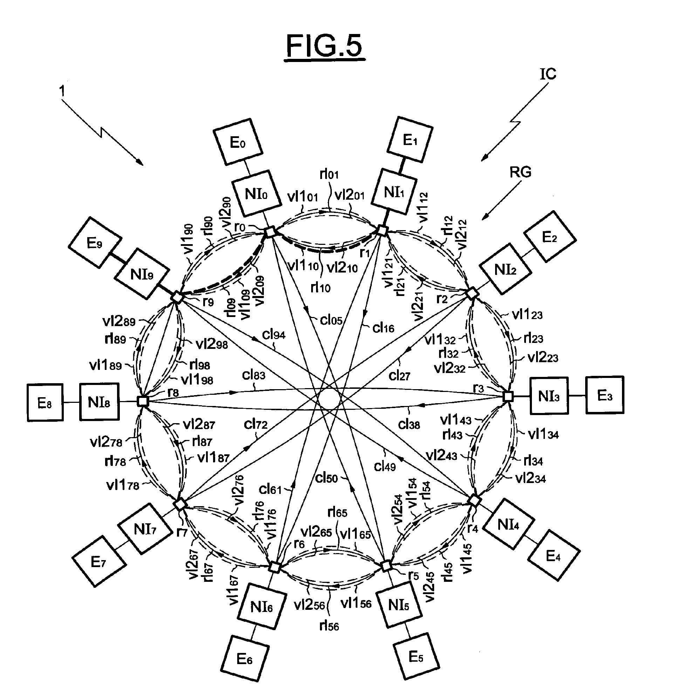

On the figure 5, the path of a data packet P from the source element E₁ to the destination element E₉ is highlighted. The preprocessing means ppm₁ of the network interface NI₁ set the value L in the first field f₁ of the header H of the data packet P. Then the routing means rm₁ of the router r₁ send the data packet P on the ring RG, in the left or anticlockwise direction L, on the first virtual channel vl1₁₀. So the router r₀ receives the data packet P. The routing means rm₀ of the router r₀ send the data packet P on the ring RG, in the left direction L, on the second virtual channel vl2₀₉. When the data packet P is received by the routing means rm₉ of the router r₉, this data packet P is transmitted to the network interface NI₉, to the destination element E₉.

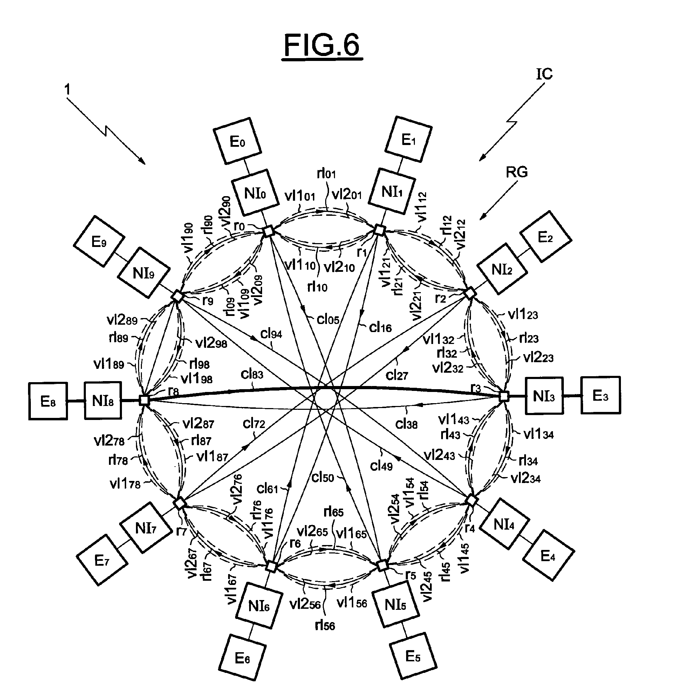

On the figure 6, the path of a data packet P from the source element E₈ to the destination element E₃ is highlighted. The preprocessing means ppm₈ of the network interface NI₈ set the value A in the first field f₁ of the header H of the data packet P. Then the routing means rm₈ of the router r₈ send the data packet P on the crossing link cl₈₃. So the router r₃ receives the data packet P. The routing means rm₃ of the router r₃ then transmits the data packet P to the network interface NI₃, to the destination element E₃.

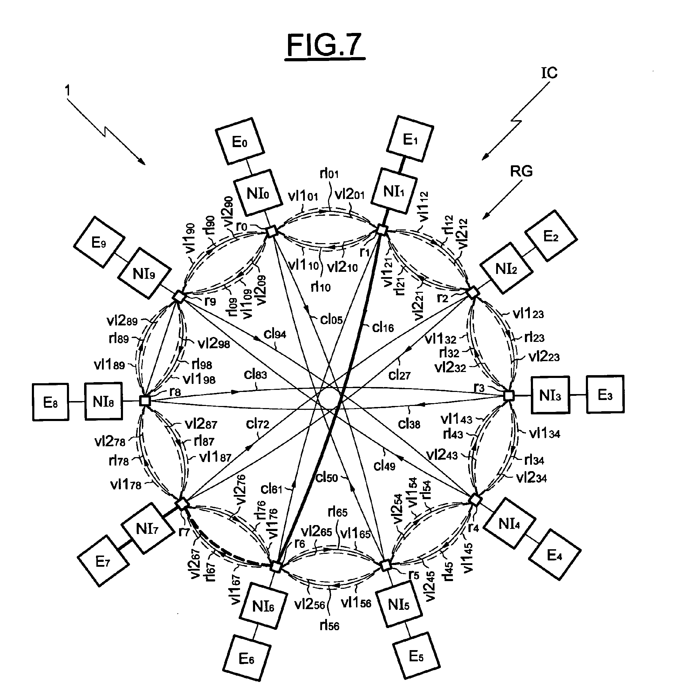

On the figure 7, the path of a data packet P from the source element E₁ to the destination element E₇ is highlighted. The preprocessing means ppm₁ of the network interface NI₁ set the value AR in the first field fₗ, of the header H of the data packet P. Then the routing means rm₁ of the router r₁ send the data packet P on the crossing link cl₁₆. So the router r₆ receives the data packet P. The routing means rm₆ of the router r₆ send the data packet P on the ring RG, in the right direction R, on the second virtual channel vl2₆₇. When the data packet P is received by the routing means rm₇ of the router r₇, this data packet P is transmitted to the network interface NI₇, to the destination element E₇.

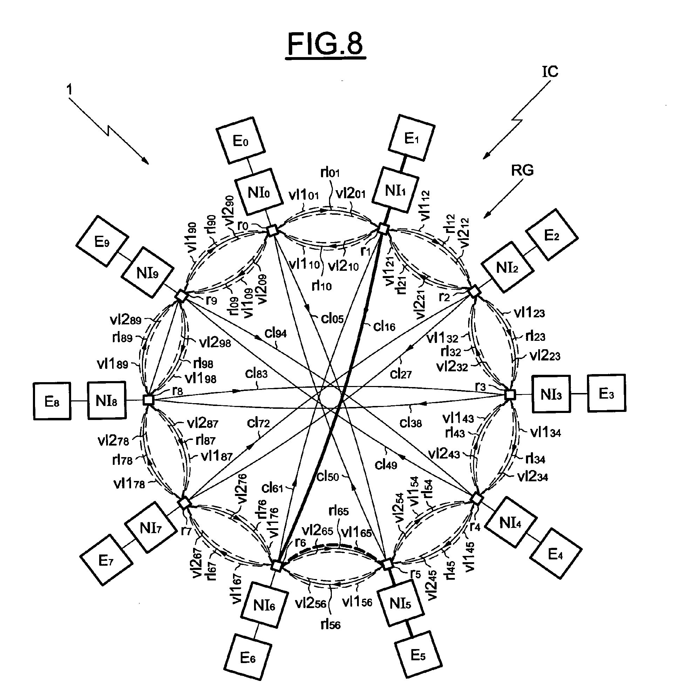

Finally, On the figure 8, the path of a data packet P from the source element E₁ to the destination element E₅ is highlighted. The preprocessing means ppm₁ of the network interface NI₁ set the value AL in the first field f₁ of the header H of the data packet P. Then the routing means rm₁ of the router r₁, send the data packet P on the crossing link cl₁₆. So the router r₆ receives the data packet P. The routing means rm₆ of the router r₆ send the data packet P on the ring RG, in the left direction L, on the first virtual channel vl1₆₅. When the data packet P is received by the routing means rm₅ of the router r₅, this data packet P is transmitted to the network interface NI₅, to the destination element E₅.

## Claims

1. System for routing data packets (P) between elements (E₀,E₁,...,E_{N-1}), comprising N network interfaces (NI₀,NI₁,...,NI_{N-1}) respectively adapted to be connected to the N elements (E₀,E₁,...,E_{N-1}), N being an even integer, and an on chip packet-switched communication network arranged in a unique ring structure (RG) including :
- N routers (r₀,r₁,...,r_{N-1}) respectively connected to the N interfaces (NI₀,NI₁,...,NI_{N-1}) ;
- N couples of opposite unidirectional ring links (rlᵢⱼ,rlⱼᵢ), each ring link carrying two virtual channels, and one couple of ring links coupling two adjacent routers on the ring (RG) ; and
- N/2 couples of opposite unidirectional crossing links (clᵢⱼ,clⱼᵢ), one couple of crossing links coupling two diametrically opposite routers of said ring (RG) ;
the system further comprising processing means, distributed within the routers (r₀,r₁,...,r_{N-1}) and the network interfaces (NI₀,NI₁,...,NI_{N-1}), adapted upon the presence of a data packet (P) to be transmitted from one source element (E_{source}) to a destination element (E_{destination}) to determine the direction characteristics of the path of said data packet (P) on the ring (RG) and if necessary to determine at each router belonging to said path which virtual channel is to be used, so as to avoid deadlocks in the transmission.

2. System according to claim 1, **characterized in that** the processing means are adapted to define said path for the transmitted data packet (P), such that said path comprises at the most d transitions between routers, d being equal to ceil(N/4).

3. System according to claim 2, **characterized in that** the processing means are adapted to define said path for the transmitted data packet (P), such that said path includes at least one transition on the ring between two adjacent routers, or a crossing transition between two diametrically opposite routers eventually followed by a circular path on the ring (RG) having at least one transition, and by the fact that the direction of a circular path is identical for all the transitions of said circular path.

4. System according to claim 2 or 3, **characterized in that**, a data packet (P) comprises a header (H) comprising a first field (f₁) defining the presence of a crossing transition and/or the direction of a circular path on said ring (RG), and a second field (f₂) defining the destination router,
and by the fact that said distributed processing means comprise local preprocessing means (ppm₀,ppm₁,...,ppm_{N_1}) in the network interfaces (NI₀,NI₁,...,NI_{N-1}), the local preprocessing means (ppm_{source}) of the network interface (NI_{source}) connected to the source element (E_{source}) being adapted for determining the content of said first field (f₁) and said second field (f₂), and comprise local routing means (rm₀,rm₁,...,rm_{N-1}) within the routers (r₀,r₁,...,r_{N-1}) for routing such data packets in accordance with the content of the first and second fields (f₁,f₂).

5. System according to claim 4, **characterized in that** the successive routers (r₀,r₁,...,r_{N-1}) are indexed with consecutive indexes (0,1,...,N-1), and by the fact that the local preprocessing means (ppm_{source}) of the source network interface (NI_{source}) comprise :
- calculating means (Calc_{source}) for calculating a value r equal to the difference modulo N between the index (destination) of the destination router and the index (source) of the source router (r_{source}) ; and
- determining means (Det_{source}) for determining the content of said first field (f₁) from the value of r.

6. System according to claim 5, **characterized in that**, said indexes being increased in the right or clockwise direction, said determining means (Det₀,Det₁,...,Det_{N-1}) are adapted to provide the content of said first field (f₁) with :
- a first value (R) representative of the right or clockwise direction on the ring (RG) if said value r belongs to the set {1,2,...,d} ;
- a second value (L) representative of the left or anticlockwise direction on the ring (RG) if said value r belongs to the set {N-d,N-d+1,...,N-1} ;
- a third value (A) representative of the crossing ring direction if said value r is equal to N/2 ;
- a fourth value (AL) representative of the crossing ring direction followed by the left or anticlockwise direction on the ring (RG) if said value r belongs to the set {d+1,d+2...,N/2-1} ; or
- a fifth value (AR) representative of the crossing ring direction followed by the right or clockwise direction on the ring otherwise, i.e. if said value r belongs to the set {N/2+1,N/2+2,...,N-d-1}.

7. System according to claim 6, **characterized in that** each routing means (rm₀,rm₁,...,rm_{N-1}) are adapted for :
- routing the data packet to its coupled network interface if the index of the corresponding router is equal to the content of the second field (f₂) of the header (H) of said data packet (P) ; and otherwise
- routing the data packet (P) according to the content of the first field (f₁) of the header (H) of said data packet (P), on a first virtual channel if said index is greater than the content of the second field (f₂) of the header (H) of the data packet (P) and on a second virtual channel otherwise.

8. System according to any one of claims 1 to 7, **characterized in that** each router comprises at least two queues connected to an unidirectional ring link connected to said router, each virtual channel being defined by at least one queue and the corresponding unidirectional ring link.

9. System according to any one of claims 4 to 8, **characterized in that**, indexes being binary encoded, routing means (rm₀,rm₁,...,rm_{N-1}) are adapted to process indexes only with the last ceil(log₂(d)) bits of the indexes.
